# EUROPÄISCHE PATENTANMELDUNG

(11) **EP 1 286 528 A2**
(43) Veröffentlichungstag der Anmeldung: **26.02.2003**
(21) Anmeldenummer: 02018389.3
(22) Anmeldetag: 14.08.2002
(51) Int. Cl.: H04M 11/00

(54) **Multifunktionsmodem**

(30) Priorität: 23.08.2001 DE 20113970 U
(71) Anmelder: Matsushita Electric Works (Europe) Aktiengesellschaft, 83601 Holzkirchen (DE)
(72) Erfinder: Zech, Harald, 83109 Grosskarolinenfeld (DE); Lex, Wolfgang, 82041 Oberhaching (DE); Rottler, Thomas, 82041 Oberhaching (DE)
(74) Vertreter: Strehl Schübel-Hopf & Partner

(57) **Zusammenfassung**

Ein Modem **11** zum Senden und Empfangen von Datensignalen weist eine Standleitungsschaltung **11a,** eine Wählvermittlungsschaltung **11b** und eine Multipointschaltung **11c** auf und vereint so verschiedene herkömmliche Modemfunktionen in einem einzigen kompakten Multifunktionsgerät.

## Beschreibung

Die Erfindung betrifft die Kombination von Schaltungen zu verschiedenen Datenübertragungstechniken in einem Modem.

Bei der Datenfernübertragung werden die zu übertragenden Signale üblicherweise auf eine Trägerfrequenz aufmoduliert, in bestimmter Weise übertragen und am Zielort demoduliert. Modulation bzw. Demodulation erfolgt durch ein Modem am Absender- und Empfängerort.

Je nachdem, ob Sender und Empfänger über eine feste Standleitung verbunden sind, der Verbindungsaufbau durch Einwahl über das öffentliche Telefonnetz oder aber im sogenannten Multipoint- (oder Multidrop-)Betrieb erfolgt, ist nach dem Stand der Technik jeweils ein anderes Spezialmodem erforderlich.

Aus DE-A-195 08 891 und DE-A-197 57 801 sind Modems gemäß dem ersten Teil des Anspruchs 1 bekannt, die jeweils zum Anschluß an ein Wählvermittlungsnetz dienen.

Um die Übertragung von Daten nach unterschiedlichen Standards zu ermöglichen, werden moderne Datenverarbeitungsanlagen oft mit mehreren einzelnen Modems ausgerüstet. Der Gesamtaufbau der Datenübertragungsanlage wird dadurch umständlich und kompliziert und ist wegen der erforderlichen Anzahl an Einzelgeräten mit hohem Platzbedarf und hohen Kosten verbunden.

Der Erfindung liegt die Aufgabe zugrunde, Nachteile, wie sie beim Stand der Technik auftreten, mindestens teilweise zu beseitigen. Eine speziellere Aufgabe kann darin gesehen werden, den für flexible Datenübertragung erforderlichen Schaltungsaufwand und Platzbedarf zu verringern.

Diese Aufgabe wird gemäß Anspruch 1 dadurch gelöst, daß eine Standleitungsschaltung, eine Wählvermittlungsschaltung und eine Multipointschaltung in einem einzigen Modem vereint werden, das damit zu einem multifunktionalen Datenübertragungsgerät wird. Gegenstand der Erfindung ist also ein multifunktionales kompaktes Modem, das je nach Bedarf nach einem von mehreren Funktionsstandards betrieben werden kann.

Vorteilhafte Ausgestaltungen der Erfindung sind in den Unteransprüchen angegeben. So ist das Modem nach einem Ausführungsbeispiel in 24-V-Gleichstromtechnik ansteuerbar und weist darüberhinaus bestimmte Standardanschlüsse/Schnittstellen auf.

Nach einer besonderen Variante der Erfindung verfügt das Modem ferner über eine ASCII-Fax-Schaltung, die per Fax zu sendende ASCII-Zeichen in eine entsprechende Pixelgrafik umwandelt, so daß diese Arbeit nicht mehr wie bisher vor dem Senden von einem Computer ausgeführt werden muß. Darüber hinaus ist das Multifunktionsmodem vorzugsweise mit einer DTMF (Dual Tone Multi Frequency)-Schaltung ausgerüstet, die einen bidirektionalen Austausch über Wähltöne ermöglicht.

Einzelne Ausführungsbeispiele der Erfindung sollen nun anhand der Zeichnungen genauer erläutert werden. Es zeigt:
Fig. 1 ein Blockschaltbild des Multifunktionsmodems der vorliegenden Erfindung;
Fig. 2 die Verbindung zweier Modems im Standleitungsbetrieb;
Fig. 3 die Verbindung zweier Modems im Wählvermittlungsbetrieb; und
Fig. 4 die Verbindung mehrerer Modems im Multipointbetrieb.

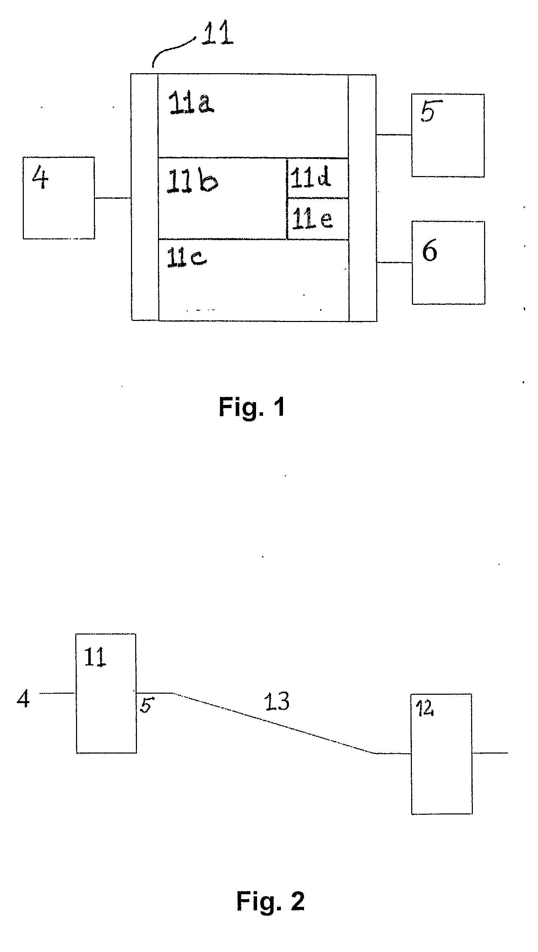

Fig. 1 zeigt den schematischen Aufbau eines Multifunktionsmodems nach der vorliegenden Erfindung. Das Modem **11** ist modular in eine Standleitungsschaltung **11a**, eine Wählvermittlungsschaltung **11b**, eine Multipointschaltung **11c**, eine ASCII-Fax-Schaltung **11d** und eine DTMF-Schaltung **11e** untergliedert. Ferner weist es eine RS232C-Schnittstelle **4** zum Verbinden mit einem Computer oder einer speicherprogrammierbaren Steuerung (SPS), einen Leitungs- (oder Line-)Anschluß 5 zur Anbindung an ein Übertragungskabel oder Fernleitungsnetz und einen DCD (Data Carrier Detect)-Ausgang 6 zur Ansteuerung in 24-Volt-Gleichstromtechnik auf. Die Funktionsarten der einzelnen Schaltungen des Multifunktionsmodems werden im folgenden anhand der weiteren Figuren genauer beschrieben.

Fig. 2 zeigt eine feste Standleitungsverbindung **13** zwischen dem Multifunktionsmodem **11** und einem Zielmodem **12**. Bei einer Standleitung (auch "leased line") wird eine feste Punkt-zu-Punkt-Verbindung über ein zweiadriges Kabel hergestellt. Sobald die Spannungsversorgung der Modems eingeschaltet wird, baut sich eine Datenübertragungsverbindung zwischen den beiden Modems auf. Eines der Modems wird als "Master", das andere als "Slave" konfiguriert. Master und Slave verwenden verschiedene Übertragungsfrequenzen, was eine Voll-Duplex-Kommunikation (Master und Slave können gleichzeitig Daten senden und empfangen) ermöglicht. Normalerweise bleibt eine solche Verbindung dauerhaft bestehen. Im Falle einer Leitungs- oder Spannungsunterbrechung bauen die Modems die Verbindung automatisch wieder auf.

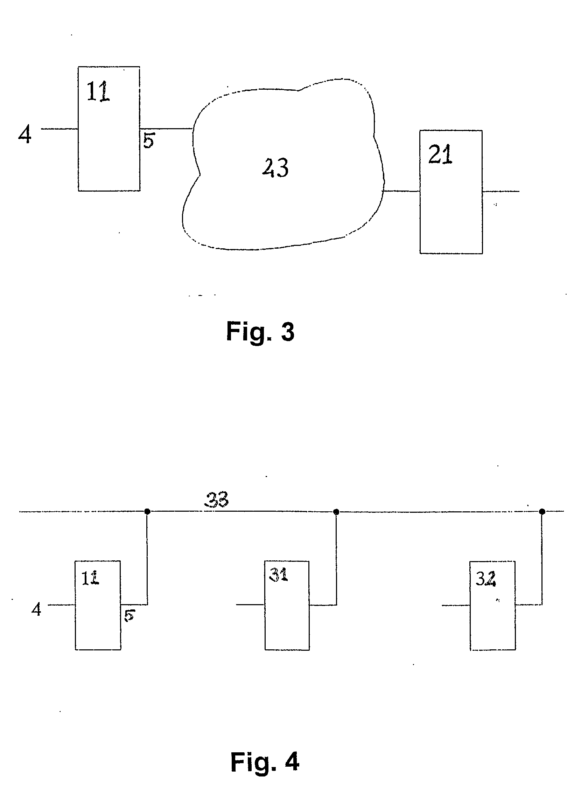

Die wohl bekannteste Verbindungsart zweier Modems ist in Fig. 3 gezeigt. Hier verhält sich das Multifunktionsmodem **11** wie jedes gewöhnliche Modem, wie es z.B. zum Aufbau einer Computer-Internet-Verbindung verwendet wird. Dazu stellt es durch Einwahl in das öffentliche Telefonnetz **23** eine Verbindung zu einem Zielmodem **21** her. Diese feste Punkt-zu-Punkt-Verbindung wird durch die Verwendung eines Trägersignals aufrechterhalten bzw. überprüft und kann von beiden Seiten jederzeit getrennt werden.

In dieser Betriebsart sieht die Erfindung auch die bereits angesprochene ASCII-Fax-Unterfunktion vor. Um einen Text an einen Faxempfänger versenden zu können, muß der Text vorher in eine Pixelgrafik, also ein digitales Bild, umgewandelt werden. Diese bisher von einem Computer zu erledigende Aufgabe wird im Multifunktionsmodem direkt von der ASCII-Fax-Schaltung **11d** übernommen. So kann eine SPS oder ein Computer eine Faxnachricht direkt als ASCII-Zeichenfolge an das Modem senden. Will eine SPS beispielsweise einen Alarmtext an ein Faxgerät versenden, muß es lediglich die Faxnummer im Modem speichern und den Alarmtext als ASCII-Zeichenfolge an das Modem übergeben. Danach wandelt das Modem automatisch den Text in eine Pixelgrafik um, speichert ihn intern zwischen, wählt das Zielmodem bzw. den Faxempfänger an, überträgt die Pixelgrafik, beendet die Verbindung und meldet eine Erfolgs- oder Fehlermeldung zurück an die SPS.

Eine weitere Unterfunktion des erfindungsgemäßen Multifunktionsmodems, die ebenfalls vorzugsweise im Wählbetrieb vorgesehen ist, stellt die Steuerung über DTMF-Töne dar. Dazu verwendet das Multifunktionsmodem Wähltöne auf DTMF-Basis zum bidirektionalen Austausch von Informationen. Will die SPS (oder ein Computer) beispielsweise einer bestimmten Person eine Alarmmitteilung machen, so kann das angeschlossene Multifunktionsmodem nach Empfangen der entsprechenden Steuersignale über die Schnittstelle **4** den Telefonapparat der Person anwählen und die vordefinierte DTMF-Tonfolge ausgeben, die von der alarmierten Person gegebenenfalls quittiert werden kann.

Umgekehrt kann über DTMF-Töne aber auch eine vordefinierte Funktion einer SPS (oder eines Computers) ausgelöst werden. Dazu ruft man das Modem über ein Tastentelefon an, erzeugt die DTMF-Töne (nach Herstellung der Verbindung und einem optionalen Quittierton vom Modem) durch Drücken der entsprechenden Zifferntasten am Telefonapparat. Anschließend werden die Wähltöne vom Modem decodiert und über die Schnittstelle **4** an die SPS oder den Computer zum Ausführen der vorprogrammierten Funktionen weitergemeldet, worauf die Verbindung nach einem optionalen Quittierton wieder getrennt wird.

In Fig. 4 ist eine Multipointverbindung des Multifunktionsmodems **11** mit mehreren anderen Modems **31, 32** gezeigt. Die Verbindung erfolgt über ein zweiadriges Kabel **33.** Alle Modems werden auf die gleiche Weise konfiguriert und sind an eine SPS bzw. einen Computer mit einer eindeutigen, individuellen Adresse (Stationsnummer) angeschlossen. Da hier alle Modems die gleiche Übertragungsfrequenz benutzen, ist nur eine Halb-Duplex-Kommunikation (d.h. es dürfen nie zwei Modems gleichzeitig senden) möglich. Im "Ruhezustand" ist kein Trägersignal auf dem Kabelnetzwerk **33**, d.h. die Verbindung bzw. Leitung wird nicht überwacht, und alle Modems sind auf Empfang geschaltet.

Zur Datenübertragung prüft ein Modem vorher, ob das Kabelnetzwerk im Ruhezustand ist und versendet anschließend die Daten in Form eines Datenpakets mit einem Adreßkopf, der aus der Empfängeradresse und einer Prüfsumme besteht. Die gesendeten Datenpakete werden von allen Modems im Kabelnetzwerk empfangen und an die angeschlossene SPS weitergeleitet. Die SPS überprüft die Korrektheit und Vollständigkeit der im Datenpaket enthaltenen Daten anhand der Prüfsumme und vergleicht dann die mit dem Paket empfangene Adresse mit der eigenen. Anschließend sendet nur das betreffende Zielmodem ein Antwort-Datenpaket zurück an den Absender.

## Patentansprüche

1. Modem zum Senden und Empfangen von Datensignalen mit einer Wählvermittlungsschaltung (**11b**) zum Aufbau einer Verbindung über ein Telefon-Wählnetz (**23**) zu einem anwählbaren Zielmodem (**21**),
**dadurch gekennzeichnet, daß** es folgende weitere Einrichtungen aufweist:
eine Standleitungsschaltung (**11a**) zum Aufbau einer festen Kabelverbindung (**13**) zu einem Zielmodem (**12**) und
eine Multipointschaltung (**11c**) zum Aufbau einer Verbindung zu mehreren über ein Netzwerk (**33**) angeschlossenen Modems (**31, 32**).

2. Modem nach Anspruch 1 mit einem DCD (Data Carrier Detect)-Ausgang (**6**) zur Ansteuerung in 24-V-Gleichstrom-Signaltechnik.

3. Modem nach Anspruch 1 oder 2 mit
einem Leitungsanschluß (**5**) zur Verbindung mit dem Zielmodem (**12, 21, 31**) über ein zweiadriges Kabel (**13, 33**) bzw. das Telefonnetz (**23**) und/oder
einer Schnittstelle (**4**) zum Anschluß an eine speicherprogrammierbare Steuerung (SPS) bzw. einen Computer.

4. Modem nach einem der vorhergehenden Ansprüche, wobei die Standleitungsschaltung (**11a**) zum gleichzeitigen Senden und Empfangen von Daten an das bzw. von dem Zielmodem (**12**) ausgelegt ist.

5. Modem nach einem der vorhergehenden Ansprüche, wobei die Standleitungsschaltung (**11a**) zum automatischen Verbindungsaufbau nach einer Unterbrechung ausgelegt ist.

6. Modem nach einem der vorhergehenden Ansprüche mit einer ASCII-Fax-Schaltung (**11d**) zum Umwandeln von per Fax zu sendenden ASCII-Zeichen in eine entsprechende Pixelgrafik.

7. Modem nach einem der vorhergehenden Ansprüche mit einer DTMF-(Dual Tone Multi Frequency)-Schaltung (**11e**), die DTMF-Steuersignale
automatisch sendet, und/oder
empfängt, decodiert und über die Schnittstelle (**4**) an eine SPS weitergibt.

8. Modem nach einem der vorhergehenden Ansprüche, wobei die Multipointschaltung (**11c**) mit der gleichen Übertragungsfrequenz und/oder Konfiguration arbeitet wie die übrigen angeschlossenen Modems (**31, 32**).

9. Modem nach einem der vorhergehenden Ansprüche, wobei die Multipointschaltung (**11c**) Datenpakete mit einem Adreßkopf sendet und empfängt, der die Daten eindeutig einem bestimmten Zielmodem (**31**) zuordnet.
